# EUROPÄISCHE PATENTSCHRIFT

(11) **EP 3 568 298 B1**
(45) Veröffentlichungstag und Bekanntmachung des Hinweises auf die Patenterteilung: **17.06.2020**
(21) Anmeldenummer: 18702411.2
(22) Anmeldetag: 10.01.2018
(51) Int. Cl.: B32B 27/10, B32B 37/26, B32B 37/24, E04F 15/02

(54) **VERFAHREN ZUR HERSTELLUNG EINES LAMINATS FÜR EINEN FUSSBODENBELAG**
PROCESS FOR PRODUCING A LAMINATE FOR A FLOOR COVERING
PROCÉDÉ DE FABRICATION D'UN STRATIFIÉ POUR UN REVÊTEMENT DE SOL

(30) Priorität: 16.01.2017 DE 102017100735
(43) Veröffentlichungstag der Anmeldung: 20.11.2019
(73) Patentinhaber: Windmöller GmbH, 32832 Augustdorf (DE)
(72) Erfinder: ROSE, Stefan, 59581 Warstein (DE); KRUSE, Georg, 32052 Herford (DE); WINDMÖLLER, Ulrich, 33758 Schloß Holte-Stukenbrock (DE)
(74) Vertreter: Wagner Albiger & Partner Patentanwälte mbB
(86) Internationale Anmeldenummer: PCT/EP2018/050544
(87) Internationale Veröffentlichungsnummer: WO 2018/130560

(56) Entgegenhaltungen:
- EP-A1- 1 262 607
- WO-A2-2009/120547
- US-A1- 2016 361 894

## Beschreibung

Die Erfindung betrifft ein Verfahren zur Herstellung eines Laminats vorzugsweise für einen Fußbodenbelag.

Aus der EP 1 262 607 B1 ist ein Verfahren zur Herstellung einer Fußbodenplatte bekannt. Dabei wird ein Laminat, bestehend aus einer Verschleißschicht, einer Dekorschicht mit einem Dekorpapier und einer an einer Rückseite des Dekorpapiers aufgetragenen Polyurethan-Schicht auf eine harte Trägerplatte wie MDF oder HDF aufkaschiert. In einem Ausführungsbeispiel ist die Verschleißschicht aus einem UV-härtbaren Polyurethan-Lack. Bedingt durch die weiche, dämpfende Polyurethan-Schicht zwischen der Dekorschicht und der harten Trägerplatte weist eine solche Laminat-Fußbodenplatte eine vergleichsweise gute Schallreduzierung auf. Durch den Polyurethan-Lack kann hier im Gegensatz zu harten Verschleißschichten aus Melamin die Verschleißschicht der Verformung des Dekorpapiers und der dämpfenden Polyurethan-Schicht folgen.

Die Herstellung des oben beschriebenen Polyurethan-Laminats hat sich jedoch als schwierig herausgestellt. Beispielsweise können sich bei der Aushärtung des Polyurethans in der Verschleißschicht Luft- oder Dampfeinschlüsse bilden, die der Transparenz der Verschleißschicht und somit der ästhetischen Wirkung der Dekorschicht abträglich sind. Auch hat sich gezeigt, dass trotz Einsatzes von mineralischen Partikeln in der Verschleißschicht die gewünschte Verschleißfestigkeit nicht erreicht werden kann. Zudem ist es schwierig, die für die gezielte Aushärtung des Polyurethans notwendige Wärmezufuhr im Herstellungsprozess so zu gestalten und zu steuern, dass das Laminat allen gestellten Qualitätsanforderungen genügt.

Der Erfindung liegt daher die Aufgabe zu Grunde, ein Verfahren zur Herstellung eines Laminats auf Basis von Polyurethan bereitzustellen, wobei durch das Verfahren eine einfache Herstellung eines qualitativ hochwertigen Laminats möglich sein soll.

Die der Erfindung zu Grunde liegende Aufgabe wird mit der Merkmalskombination gemäß Anspruch 1 gelöst. Ausführungsbeispiele der Erfindung können den Unteransprüchen entnommen werden.

Beim erfindungsgemäßen Verfahren wird ein erstes flüssiges Polyurethan-Material auf eine Release-Schicht zur Ausbildung der Verschleißschicht aufgetragen. In dieses erste Polyurethan-Material wird ein Dekorbogen eingelegt, wobei über geeignete Mittel wie beispielsweise eine Weichwalze dieses Einlegen mit einem gewissen Druck erfolgen kann. Nach dem Einlegen des Dekorbogens in das erste Polyurethan-Material wird ein zweites flüssiges Polyurethan-Material auf den Dekorbogen (bzw. auf das erste Polyurethan-Material aufgebracht. Der Dekorbogen wird mit dem ersten Polyurethan-Material und dem zweiten Polyurethan-Material imprägniert. Die Imprägnierung des Dekorbogens erfolgt dabei von zwei Seiten, nämlich einerseits von der der Release-Schicht zugewandten Seite des Dekorbogens, die auch als obere Seite bezeichnet werden kann, da sie in Einsatzlage des Laminats nach oben zeigt. Die Imprägnierung erfolgt andererseits von der Seite des Dekorbogens, auf das das zweite Polyurethan-Material aufgetragen wurde (auch untere Seite des Dekorbogens genannt).

Zum Aushärten des ersten Polyurethan-Materials und des zweiten Polyurethan-Materials wird Wärmeenergie zugeführt. Vorzugsweise umfasst das erste Polyurethan-Material wenigstens zwei Komponenten, durch deren Reaktion miteinander die Aushärtung des Polyurethan-Materials erfolgt. Über die Zuführung der Wärmeenergie lässt sich dabei die Reaktion beschleunigen bzw. steuern.

Nach wenigstens teilweiser Aushärtung des ersten Polyurethan-Materials wird die Release-Schicht von der durch das erste Polyurethan-Material gebildeten Verschleißschicht getrennt. Erfindungsgemäß ist vorgesehen, dass die Wärmeenergie zu dem ersten Polyurethan-Material und dem zweiten Polyurethan-Material von unten durch die Release-Schicht hindurch zugeführt wird. Durch diese Art der Wärmezufuhr lässt sich der Herstellungsprozess in gewünschter Weise sehr genau steuern, so dass ein Laminat mit hoher Qualität produziert werden kann.

Das Laminat lässt sich insbesondere als Bodenbelag bzw. als Komponente eines Bodenbelags einsetzen. Es kann aber auch als Wand- oder Deckenbelag eingesetzt werden.

In einem Ausführungsbeispiel wird die Wärmeenergie ausschließlich (zu 100 %) von unten durch die Release-Schicht hindurch zugeführt. Dies bedeutet, dass es keinen weiteren externen Energieeintrag gibt, durch den die Aushärtung der Polyurethan-Materialien gesteuert oder beschleunigt wird. Der externe Energieertrag grenzt sich hierbei von dem natürlichen Energieeintrag (Wärme, möglicherweise UV-Strahlung etc.) durch die Umgebung ab, in der das Verfahren stattfindet. In einem alternativen Ausführungsbeispiel beträgt der Energieanteil von unten durch die Release-Schicht mehr als 80 %, wobei beispielsweise durch Strahler von oben die restlichen 20 % für die Aushärtung bereitgestellt werden.

Die Release-Schicht kann auf wenigstens einer Wärmeplatte aufliegen, deren Temperatur in einem bevorzugten Ausführungsbeispiel kleiner als 100° (Grad Celsius) ist. Ein Temperaturniveau für die Wärmeplatte von 70 bis 100°, vorzugsweise 75 bis 90°, hat sich als besonders günstig für das Verfahren erwiesen. Bei diesem Temperaturniveau kann als Energieträger zum Beheizen der Wärmeplatte Wasser eingesetzt werden, welches, abgesehen von dem Pumpendruck zum Umlauf des Wassers, drucklos durch die Wärmeplatte geführt werden kann. Dies vereinfacht den Aufbau der Wärmeplatte und den Anschluss der Wärmeplatte an einen Heizkessel oder dergleichen. Zum Erwärmen der Wärmeplatte können auch andere Wärmeträger wie beispielsweise Öl eingesetzt werden.

Auf den Dekorbogen kann ein separater Verstärkungsbogen aufgelegt werden, der ähnlich wie der Dekorbogen durch das erste Polyurethan-Material und/oder durch das zweite Polyurethan-Material imprägniert wird. Der separate Verstärkungsbogen wird dabei vorzugsweise auf den Dekorbogen gelegt, bevor das zweite Polyurethan-Material auf den Dekorbogen aufgebracht wird. Somit ergibt sich, von der Release-Schicht und somit in Einsatzlage des Laminates von oben aus gesehen, folgender Schichtaufbau:
- erstes Polyurethan-Material, das die Verschleißschicht bildet;
- Dekorbogen;
- Verstärkungsbogen;
- eine rückseitige Schicht aus dem zweiten Polyurethan-Material.

Der Dekorbogen und der Verstärkungsbogen werden bevorzugt durch das erste Polyurethan-Material und das zweite Polyurethan-Material imprägniert, sodass die Grenze zwischen dem ersten Polyurethan-Material und dem Dekorbogen sowie zwischen dem Verstärkungsbogen und dem zweiten Polyurethan-Material fließend sind. Das heißt, dass auch bei Verwendung des Verstärkungsbogens das zweite Polyurethan-Material bis zum Dekorbogen durchdringen und dort zur Imprägnierung beitragen kann. Gleiches gilt sinngemäß für den Verstärkungsbogen. Auch dieser kann vorzugsweise sowohl durch das zweite Polyurethan-Material als auch durch das erste Polyurethan-Material imprägniert werden. Die gemeinsame Imprägnierung von Dekorbogen und Verstärkungsbogen von jeweils zwei Seiten führt zu einem Verbund, der in Richtung senkrecht zur Flächenausdehnung der einzelnen Schichten ein gute Reiß- oder Spaltfestigkeit aufweist.

Vorzugsweise ist der Verstärkungsbogen aus Glasvlies. Alternativ oder zusätzlich kann auch ein Glasgewebe eingesetzt werden. Das Vlies und/oder das Gewebe können auch aus anderen Verstärkungsmaterialien sein.

In einem bevorzugten Ausführungsbeispiel werden der Dekorbogen, der Verstärkungsbogen (soweit dieser vorgesehen ist) und die Release-Schicht jeweils als Endlosbahn über die Wärmeplatte bzw. über mehrere, hintereinander geschaltete Wärmeplatten hinweg bewegt. Somit lässt sich das Laminat in einem Endlosverfahren kontinuierlich herstellen. Vorzugsweise lassen sich die einzelnen Wärmeplatten individuell mit Wärmeenergie versorgen, so dass sie beispielsweise unterschiedlich stark beheizt werden und unterschiedliche Temperaturniveaus aufweisen. Die einzelnen Materialen oder Bögen werden vorzugsweise - in Bewegungsrichtung gesehen mit einem gewissen Abstand - oberhalb der Wärmeplatten aufgetragen bzw. abgelegt. So kann für jeden Auftrag oder jedes Ablegen eine gezielte Wärmezufuhr eingestellt werden.

Die Release-Schicht kann durch Unterdruck an der Wärmeplatte gehalten werden. Der Unterdruck ist dabei so einzustellen, dass die Zugkräfte, um die Release-Schicht relativ zur Wärmeplatte hinweg zu bewegen, nicht zu groß werden und dann die Release-Schicht reißt. Durch den Unterdruck wird die Release-Schicht nicht nur in gewünschter Position bzw. in gewünschter Bahn erhalten. Der Unterdruck sorgt auch für einen direkten Kontakt zwischen Release-Schicht und Wärmeplatte, was für einen guten Wärmeübergang von der Wärmeplatte auf die Release-Schicht sorgt. Dadurch lässt sich die Wärme, die durch die Release-Schicht geleitet wird und das erste Polyurethan-Material und das zweite Polyurethan-Material aushärtet, zuverlässig und genau einstellen.

In einem Ausführungsbeispiel weist die Release-Schicht eine Oberflächenstruktur auf, um eine äußere Oberfläche der Verschleißschicht mit einer korrespondierenden (negativen) Oberflächenstruktur auszubilden.

Beispielsweise kann für einen Dekorbogen, auf den ein Holzdekor gedruckt ist, die Release-Schicht derart geprägt sein, dass deren Oberflächenstruktur kleine Erhebungen aufweist, die in der äußeren Oberfläche der Verschleißschicht zu entsprechenden kleinen Vertiefungen führt, um Holzporen zu imitieren. Die Art, Größe, Verteilung und Anordnung der einzelnen Erhebungen oder Vertiefungen der Oberflächenstruktur der Release-Schicht kann grundsätzlich frei gewählt werden, wobei sie aber vorzugsweise mit dem Druckbild des Dekorbogens in einem Zusammenhang stehen. So können in einem Ausführungsbeispiel eine Erhebung in der Release-Schicht und ein grafischen Merkmal des Dekorbogens genau zueinander ausgerichtet sein. Damit kann die Oberflächenstruktur der äußeren Oberfläche der Verschleißschicht die ästhetische Wirkung des Dekorbogens verstärken. Dies führt zu einem Laminat mit einer äußeren Oberfläche, die exakt ausgerichtete Oberflächenmerkmale aufweist. Eine derartige Ausrichtung von Oberflächenstruktur und Druckbild ist vergleichbar mit der bekannten EIR-Technologie (Embossed-In-Register oder auch Synchronpore).

Vor dem Einlegen des Dekorbogens können mineralische Partikel in trockener Form auf das erste Polyurethan-Material gestreut werden. Vorzugsweise umfassen die mineralischen Partikel Korundpartikel mit einer Teilchengröße von 30 bis 80 µm. Das erste Polyurethan-Material sollte dabei vorzugsweise (was durch die Zufuhr der Wärmenergie eingestellt werden kann) so beschaffen sein, dass die Korundpartikel nicht bis auf die Release-Schicht absinken, sondern eher in einem gewissen Abstand dazu in dem Polyurethan-Material gehalten werden. Auf der anderen Seite darf das erste Polyurethan-Material auch nicht zu zähflüssig sein, da ansonsten eine vollständige Imprägnierung des Dekorbogens schwierig werden könnte. Die vergleichsweise großen Korundpartikel sorgen für eine sehr gute Verschleißfestigkeit des Laminats. Bedingt durch den Abstand zwischen Korundpartikel und Release-Schicht wird Letztgenannte nicht beschädigt. Auch wird dadurch die Gefahr reduziert, dass die Korundpartikel durch direkte Auflage auf der Release-Schicht ein homogenes Ausgießen der Oberflächenstruktur der Release-Schicht verhindern.

Vorzugsweise ist das erste Polyurethan-Material aus aliphatischen Polyurethan-Komponenten zusammengesetzt. Das zweite Polyurethan-Material ist vorzugsweise aus aromatischen Polyurethan-Komponenten zusammengesetzt. Es hat sich dabei gezeigt, dass trotz der unterschiedlichen Polyurethan-Komponenten keine störenden Grenzschichten im Laminat entstehen, durch die die Spaltfestigkeit des Laminats zu sehr leidet.

In einem Ausführungsbeispiel ist der Dekorbogen ein Dekorpapier auf Zellstoffbasis. Das Flächengewicht kann dabei 20 bis 80 g/m² betragen. In einem Ausführungsbeispiel beträgt das Flächengewicht 30 bis 50 g/m².

Der Dekorbogen kann als Endlosbahn über eine erste Heizwalze geführt werden, um die Restfeuchte im Bogenmaterial zu reduzieren. Vorzugsweise beträgt dabei die Restfeuchte nach der Heizwalze weniger als 1 Prozent oder gar 0,5 %. Alternativ oder zusätzlich kann die Release-Schicht über eine zweite Heizwalze geführt werden, um auch hier deren Restfeuchte möglichst klein zu halten.

Auf das zweite Polyurethan-Material kann ein drittes Polyurethan-Material aufgetragen werden. Das Aufbringen des dritten Polyurethan-Materials kann dabei erst erfolgen, wenn das erste Polyurethan-Material und das zweite Polyurethan-Material bereits (vollständig) ausgehärtet sind. Alternativ ist auch möglich, das dritte Polyurethan-Material auf das noch flüssige bzw. erst teilweise ausgehärtete zweite Polyurethan-Material aufzubringen.

Das dritte Polyurethan-Material kann organische oder anorganische Füllstoffe enthalten. In Betracht kommen Sand, Kreide, Ton, Mineralien oder Glas als anorganische Füllstoffe. Holz, Kork, Lignin, Pflanzenfasern können als organische Füllstoffe oder auch Polystyrol oder Granulate als polymere Füllstoffe eingesetzt werden.

Das dritte Polyurethan-Material kann in einer Menge aufgetragen werden, so dass dadurch eine Polyurethan-Schicht entsteht, die eine Stärke von 100 bis 5000 µm aufweisen kann. Diese Polyurethan-Schicht kann durch Einlegen eines (weiteren) Verstärkungsbogens verstärkt werden. Beispielsweise kann hier ein Vlies oder Gewebe (zum Beispiel ein Glasvlies oder ein Glasgewebe) zum Einsatz kommen. Zur Ausbildung einer abschließenden Funktionsschicht kann auf das dritte Polyurethan-Material ein Funktionsbogen gelegt werden. Die Funktionsschicht kann ein Schaum, ein Vliesstoff oder auch eine Klebeschicht sein, die mit einer Abziehfolie abgedeckt sein kann. Die Funktionsschicht kann eine Oberflächenbeschaffenheit aufweisen, durch die das Laminat ohne Klebstoff auf einen geeigneten Unterboden verlegt werden kann (loose-lay-Verlegemethode).

Die Funktionsschicht bzw. der Funktionsbogen kann auch direkt auf das zweite Polyurethan-Material aufgetragen/aufgelegt werden. Es ist also nicht zwangsläufig notwendig, eine dritte Polyurethanschicht vorzusehen.

In einem Ausführungsbeispiel ist der Funktionsbogen eine Korkplatte, die in aufgewickelter Form als Endlosbahn auf das zweite Polyurethan-Material oder auf das dritte Polyurethan-Material gelegt werden kann. Das Einlegen der Korkplatte erfolgt vorzugsweise, wenn das zweite Polyurethan-Material und/oder das dritte Polyurethan-Material noch flüssig sind oder zumindest noch nicht ausgehärtet sind.

Zur Herstellung der Korkplatte kann Korkgranulat eingesetzt werden, das unter mechanischen Druck und/oder Vakuum mit einem Bindemittel zur Korkplatte verklebt wird. Als Bindemittel wird vorzugsweise Polyurethan verwendet, sodass zwischen einer derart hergestellten Korkplatte (Korkgranulat mit Polyurethan als Bindemittel) und dem zweiten bzw. dritten Polyurethan-Material eine gute Bindung erzielt werden kann.

Die Dicke des Funktionsbogens (Korkplatte) kann 500 bis 5000 µm, vorzugsweise 0,75 bis 2 mm betragen.

Nach erfolgter Herstellung können somit aus dem Laminat einzelne Paneele geschnitten werden, deren Ränder mit Profilen versehen werden können, um baugleiche Paneele miteinander verbinden zu können. Auch ist es möglich, dass Laminat auf eine Trägerplatte zu kaschieren und dann den Verbund aus Trägerplatte und Laminat in Paneele zu schneiden. Die Profile werden dabei vorzugsweise in das Material der Trägerplatte eingeformt (zum Beispiel eingefräst), wobei hier die Polyurethan-Schicht aus dem dritten Polyurethan-Material vorzugsweise weniger stark ausgebildet ist (beispielsweise 50 bis 800 µm) oder ganz weggelassen wird.

In einem Ausführungsbeispiel wird auf der der Verschleißschicht abgewandten Oberfläche des Laminats eine Klebeschicht mit einer Abziehfolie aufgebracht. Das Laminat kann somit trotz Klebeschicht als Rollenware gelagert und transportiert werden. Das Verbinden mit der Trägerplatte, beispielsweise räumlich getrennt von dem Ort der Herstellung des Laminats, lässt sich dann besonders einfach realisieren, da ein gesonderter Auftrag von Klebstoff auf die Trägerplatte oder das Laminat nicht notwendig ist.

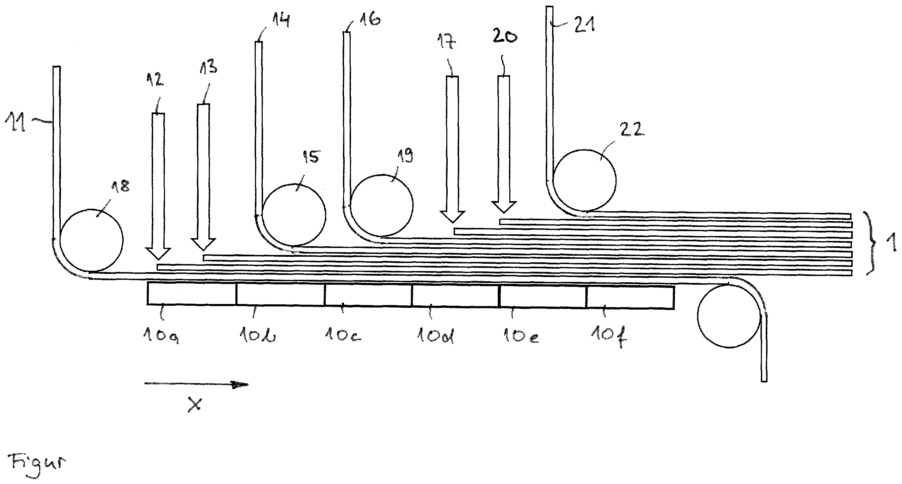

Anhand einer einzelnen Figur soll die Erfindung näher erläutert werden. Durch die Figur soll in schematischer Weise das erfindungsgemäße Verfahren zur Herstellung des Laminats verdeutlicht werden.

Die Figur zeigt schematisch mehrere, hintereinander angeordnete Wärmeplatten 10 (10a bis 10f), über die eine Release-Schicht 11 in Form einer Endlosbahn aus Release-Papier geführt wird, um ein Laminat 1 herzustellen. In der Darstellung der Figur wird dabei die Release-Schicht von links nach rechts bewegt, was auch durch eine horizontale Bewegungsrichtung X verdeutlicht ist. Auf die Release-Schicht 11 wird auf der Höhe der Wärmeplatte 10a zunächst ein erstes Polyurethan-Material 12 von oben aufgetragen. Beim Auftragen auf die Release-Schicht 11 ist das erste Polyurethan-Material in flüssiger Form. Nach dem Auftrag des ersten Polyurethan-Materials 12 auf die Release-Schicht 11 erfolgt das Aufstreuen von trockenen Korundpartikeln 13. Danach wird ein Dekorbogen 14 in das erste Polyurethan-Material 12 eingelegt bzw. aufgelegt (die Begriffe Einlegen und Auflegen werden hier synonym verstanden). Da das erste Polyurethan-Material 12 beim Einlegen des Dekorbogens 14 noch flüssig ist, beginnt damit die Imprägnierung des Dekorbogens 14. Der Dekorbogen ist ebenfalls eine Endlosbahn. Sie ist vorzugsweise aus einem Dekorpapier aus Zellstoff.

Eine vertikale Höhe einer Walze 15, mit deren Hilfe der Dekorbogen 14 den bereits abgelegten Schichten zugeführt wird, kann so eingestellt werden, dass der Dekorbogen 14 leicht in das erste Polyurethan-Material 12 hineingedrückt wird.

Über den Dekorbogen 14 wird danach ein separater Verstärkungsbogen 16 gelegt, der hier als eine Endlosbahn aus Glasvlies ausgebildet ist. Nach dem Auflegen/Einlegen des Verstärkungsbogens 16 erfolgt das Auftragen eines zweiten flüssigen Polyurethan-Materials 17, das sich von dem ersten Polyurethan-Material 12 unterscheidet.

Dem zweiten flüssigen Polyurethan-Material 17 folgt ein drittes flüssiges Polyurethan-Material 20, das beispielsweise mit Füllstoffen angereichert ist. Zur Ausbildung einer Funktionsschicht wird schließlich noch auf das dritte Polyurethan-Material 20 ein Funktionsbogen 21 gelegt, der über eine Walze 22 zugeführt wird. Ein Verpressen der einzelnen Schichten bzw. des Laminats erfolgt nicht.

Die Imprägnierung des Dekorbogens 14 und des Verstärkungsbogens 16 erfolgt sowohl von unten (vornehmlich durch das erste Polyurethan-Material 12) als auch von oben (vornehmlich durch das zweite Polyurethan-Material 17). Das Maß der Vermischung der Polyurethan-Materialen 12, 17 mit hängt dabei einerseits von der Durchlässigkeit der Bögen 14, 16 und andererseits davon ab, wie viskos die Materialen 12, 17 sind. Die Viskosität der Materialen 12, 17 lässt sich erfindungsgemäß über die gesteuerte Wärmezufuhr einstellen, wobei als Steuerungsparameter die Temperatur der Wärmeplatten und die Vorschubgeschwindigkeit der Release-Schicht 11 genutzt werden können.

Wie auch bei dem Dekorbogen 14 wird die Zuführung der Release-Schicht 11 über eine Walze realisiert, die hier mit 18 bezeichnet ist. Eine weitere Walze, mit der der Verstärkungsbogen 16 umgelenkt wird, ist mit 19 bezeichnet. Weitere, hier nicht dargestellte Walzen, über die die jeweiligen Bögen zugeführt oder umgelenkt werden, können beheizt sein, um die Restfeuchte in den Bögen zu reduzieren. Es sei darauf hingewiesen, dass die Figur die Herstellung nur schematisch zeigt, so dass die gezeigte Lage der einzelnen, möglicherweise beheizten Walzen 15, 18, 19 und 21 von der Lage einer wirklichen Umsetzung des Verfahrens sich deutlich unterscheiden können. Dies gilt auch sinngemäß für die in der Figur gezeigten Abstände, Maße etc.

Nach Passieren der letzten Wärmeplatte 10f sind die Polyurethan-Materialen soweit ausgehärtet, dass die Release-Schicht 11 vom Laminat 1 getrennt und zwecks weiterer Verwendung wieder aufgerollt werden kann. Das Laminat 1 kann ebenfalls aufgerollt werden und somit als Rollenware gelagert und transportiert werden.

Die Wärmeenergie, durch die eine Aushärtung des ersten Polymer-Materials 12 und des zweiten Polymer-Material 17 gesteuert bzw. beschleunigt wird, wird durch die Wärmeplatten 10 dem Prozess zugeführt. Ein Wärmeträger in Form von Warmwasser in einem Temperaturbereich von 75 bis 90° fließt durch die Wärmeplatten 10 und erwärmt diese entsprechend. Die Wärmeplatten 10 geben ihre Wärme durch die Release-Schicht 11 an das erste Polyurethan-Material 12 und das zweite Polyurethan-Material 17 ab. Die Zufuhr des Warmwassers erfolgt Wärmeplatten-spezifisch. Dies bedeutet beispielsweise, dass über die Wärmeplatte 10f eine andere Wärmemenge abgegeben wird als über beispielsweise die Wärmeplatte 10a. Ist beispielsweise das erste Polyurethan-Material 12 noch zu flüssig, wenn die Korundpartikel 13 aufgestreut werden, kann über einen größeren Wärmeeintrag durch die Wärmeplatte 10a die anfängliche Aushärtung etwas beschleunigt werden.

Umgekehrt darf die Aushärtung des ersten Polymer-Materials auch nicht zu schnell erfolgen, wenn zumindest ein bestimmtes Maß an Imprägnierung der Bögen 14, 16 durch das erste Polyurethan-Material erfolgen soll.

Unter der Annahme, dass nach Passieren der Wärmeplatte 10e der Dekorbogen 14 und der Verstärkungsbogen 16 im gewünschten Umfang imprägniert sind, kann über die Wärmeplatte 10f eine größere Wärmemenge zugeführt werden, um die Aushärtung schnell zum Ende zu führen.

### Bezugszeichenliste

- 1: Laminat

- 10: Wärmeplatte (10a bis 10f)
- 11: Release-Schicht
- 12: Erstes Polyurethan-Material
- 13: Korundpartikel
- 14: Dekorbogen
- 15: Walze
- 16: Verstärkungsbogen
- 17: Zweites Polyurethan-Material
- 18: Walze
- 19: Walze
- 20: Drittes Polyurethan-Material
- 21: Funktionsbogen
- 22: Walze

- X: Bewegungsrichtung

## Patentansprüche

1. Verfahren zur Herstellung eines Laminats (1) vorzugsweise für einen Fußbodenbelag, wobei das Laminat (1) eine Dekorschicht und eine Verschleißschicht aus Polyurethan aufweist, mit folgenden Schritten:
- Aufbringen eines ersten flüssigen Polyurethan-Materials (12) auf eine Release-Schicht (11) zur Ausbildung der Verschleißschicht,
- Einlegen eines Dekorbogens (14) in das erste Polyurethan-Material (12),
- Aufbringen eines zweiten flüssigen Polyurethan-Materials (17) auf den Dekorbogen (14), der mit dem ersten Polyurethan-Material (12) und dem zweiten Polyurethan-Material (17) imprägniert wird,
- Zuführung von Wärmeenergie zum Aushärten des ersten Polyurethan-Materials (12) und des zweiten Polyurethan-Materials (17),
- Trennen der Release-Schicht (11) von der Verschleißschicht,
wobei die Wärmeenergie zu dem ersten Polyurethan-Material (12) und dem zweiten Polyurethan-Material (17) von unten durch die Release-Schicht hindurch zugeführt wird.

2. Verfahren nach Anspruch 1, **dadurch gekennzeichnet, dass** die Release-Schicht (11) auf wenigstens einer Wärmeplatte (10) aufliegt, deren Temperatur weniger als 100° C beträgt.

3. Verfahren nach Anspruch 2 oder 3, **dadurch gekennzeichnet, dass** auf den Dekorbogen (14) ein separater Verstärkungsbogen (16) aufgelegt wird, der mit dem zweiten Polyurethan-Material (17) und vorzugsweise mit dem ersten Polyurethan-Material (12) imprägniert wird.

4. Verfahren nach Anspruch 3, **dadurch gekennzeichnet, dass** der Verstärkungsbogen (16) aus Glasvlies ist.

5. Verfahren nach Anspruch 3 oder 4, **dadurch gekennzeichnet, dass** der Dekorbogen (14), der Verstärkungsbogen (16) und die Release-Schicht (11) jeweils als Endlosbahn über die Wärmeplatte (10) hinweg bewegt werden.

6. Verfahren nach Anspruch 5, **dadurch gekennzeichnet, dass** die Release-Schicht (11) durch Unterdruck an der Wärmeplatte (10) gehalten wird.

7. Verfahren nach einem der Ansprüche 1 bis 6, **dadurch gekennzeichnet, dass** die Release-Schicht (11) eine Oberflächenstruktur aufweist, um eine äußere Oberfläche der Verschleißschicht mit einer korrespondierenden Oberflächenstruktur auszubilden.

8. Verfahren nach einem der Ansprüche 1 bis 7, **dadurch gekennzeichnet, dass** vor dem Einlegen des Dekorbogens (14) mineralische Partikel in trockener Form auf das erste Polyurethan-Material (12) gestreut werden.

9. Verfahren nach einem der Ansprüche 1 bis 8, **dadurch gekennzeichnet, dass** das erste Polyurethan-Material (12) aus aliphatischen Polyurethan-Komponenten und das zweite Polyurethan-Material (17) aus aromatischen Polyurethan-Komponenten zusammengesetzt sind.

10. Verfahren nach einem der Ansprüche 1 bis 9, **dadurch gekennzeichnet, dass** der Dekorbogen (14) ein Dekorpapier auf Zellstoffbasis mit einem Flächengewicht von 20 bis 80 g/m² ist.

11. Verfahren nach einem der Ansprüche 1 bis 10, **dadurch gekennzeichnet, dass** der Dekorbogen (14) als Endlosbahn über eine erste Heizwalze und/oder die Release-Schicht (11) als Endlosbahn über eine zweite Heizwalze geführt werden.

12. Verfahren nach einem der Ansprüche 1 bis 11, **dadurch gekennzeichnet, dass** auf das zweite Polyurethan-Material (17) ein drittes Polyurethan-Material (20) aufgetragen wird.

13. Verfahren nach einem der Ansprüche 1 bis 11, **dadurch gekennzeichnet, dass** auf das zweite Polyurethan-Material oder auf ein drittes Polyurethan-Material (20) ein Funktionsbogen gelegt wird.

14. Verfahren nach Anspruch 13, **dadurch gekennzeichnet, dass** der Funktionsbogen eine Korkplatte ist.

15. Verfahren nach einem der Ansprüche 1 bis 14, **dadurch gekennzeichnet, dass** auf einer der Verschleißschicht abgewandten Oberfläche des Laminats (1) eine Klebschicht mit einer Abziehfolie aufgebracht wird.

## Claims

1. Method for producing a laminate (1) preferably for a floor covering, wherein the laminate (1) has a decorative layer and a wear layer of polyurethane, comprising the following steps:
- applying a first liquid polyurethane material (12) to a release layer (11) to form the wear layer,
- inserting a decorative sheet (14) into the first polyurethane material (12),
- applying a second liquid polyurethane material (17) to the decorative sheet (14), which is impregnated with the first polyurethane material (12) and the second polyurethane material (17),
- supplying heat energy to cure the first polyurethane material (12) and the second polyurethane material (17),
- separating the release layer (11) from the wear layer,
wherein the heat energy is supplied to the first polyurethane material (12) and the second polyurethane material (17) from below through the release layer.

2. Method according to claim 1, **characterised in that** the release layer (11) rests on at least one hotplate (10), the temperature of which is lower than 100°C.

3. Method according to claim 2 or 3, **characterised in that** a separate reinforcing sheet (16) is placed on the decorative sheet (14), which reinforcing sheet is impregnated with the second polyurethane material (17) and preferably the first polyurethane material (12).

4. Method according to claim 3, **characterised in that** the reinforcing sheet (16) is made of glass mat.

5. Method according to claim 3 or 4, **characterised in that** the decorative sheet (14), the reinforcing sheet (16) and the release layer (11) are each moved as a continuous sheet over the hotplate (10).

6. Method according to claim 5, **characterised in that** the release layer (11) is held by negative pressure on the hotplate (10).

7. Method according to any of claims 1 to 6, **characterised in that** the release layer (11) has a surface structure to form an outer surface of the wear layer having a corresponding surface structure.

8. Method according to any of claims 1 to 7, **characterised in that**, before the decorative sheet (14) is inserted, mineral particles are scattered in a dry form onto the first polyurethane material (12).

9. Method according to any of claims 1 to 8, **characterised in that** the first polyurethane material (12) is composed of aliphatic polyurethane components and the second polyurethane material (17) is composed of aromatic polyurethane components.

10. Method according to any of claims 1 to 9, **characterised in that** the decorative sheet (14) is a pulp-based decorative paper with a weight per unit area of 20 to 80 g/m².

11. Method according to any of claims 1 to 10, **characterised in that** the decorative sheet (14) is guided as a continuous sheet over a first heating roller and/or the release layer (11) is guided as a continuous sheet over a second heating roller.

12. Method according to any of claims 1 to 11, **characterised in that** a third polyurethane material (20) is applied to the second polyurethane material (17).

13. Method according to any of claims 1 to 11, **characterised in that** a functional sheet is placed on the second polyurethane material or on a third polyurethane material (20).

14. Method according to 13, **characterised in that** the functional sheet is a cork plate.

15. Method according to any of claims 1 to 14, **characterised in that** an adhesive layer with a peel-off film is applied on a surface of the laminate (1) facing away from the wear layer.

## Revendications

1. Procédé de fabrication d'un stratifié (1) destiné de préférence à un revêtement de sol, le stratifié (1) comportant une couche décorative et une couche d'usure en polyuréthane, comprenant les étapes suivantes :
- application d'un premier matériau polyuréthane liquide (12) sur une couche anti-adhérente (11) pour former la couche d'usure,
- insertion d'une feuille décorative (14) dans le premier matériau polyuréthane (12),
- application d'un deuxième matériau polyuréthane liquide (17) sur la feuille décorative (14) qui est imprégnée du premier matériau polyuréthane (12) et du deuxième matériau polyuréthane (17),
- apport d'énergie thermique pour durcir le premier matériau polyuréthane (12) et le deuxième matériau polyuréthane (17),
- séparation de la couche anti-adhérente (11) de la couche d'usure,
l'énergie thermique étant acheminée vers le premier matériau polyuréthane (12) et le deuxième matériau polyuréthane (17) par le bas via la couche anti-adhérente.

2. Procédé selon la revendication 1, **caractérisé en ce que** la couche anti-adhérente (11) repose sur au moins une plaque chauffante (10) dont la température est inférieure à 100 °C.

3. Procédé selon les revendications 2 ou 3, **caractérisé en ce qu'**une feuille de renfort (16) séparée, qui est imprégnée du deuxième matériau polyuréthane (17) et de préférence du premier matériau polyuréthane (12), est appliquée sur la feuille décorative (14).

4. Procédé selon la revendication 3, **caractérisé en ce que** la feuille de renfort (16) est constituée d'un voile de verre.

5. Procédé selon les revendications 3 ou 4, **caractérisé en ce que** la feuille décorative (14), la feuille de renfort (16) et la couche anti-adhérente (11) sont respectivement déplacées sous forme de bande continue sur la plaque chauffante (10).

6. Procédé selon la revendication 5, **caractérisé en ce que** la couche anti-adhérente (11) est maintenue par dépression contre la plaque chauffante (10).

7. Procédé selon l'une quelconque des revendications 1 à 6, **caractérisé en ce que** la couche anti-adhérente (11) présente une texture superficielle, afin qu'une surface extérieure de la couche d'usure soit façonnée avec une texture superficielle correspondante.

8. Procédé selon l'une quelconque des revendications 1 à 7, **caractérisé en ce que**, avant la pose de la feuille décorative (14), des particules minérales sont répandues sous forme sèche sur le premier matériau polyuréthane (12).

9. Procédé selon l'une quelconque des revendications 1 à 8, **caractérisé en ce que** le premier matériau polyuréthane (12) est constitué de composants de polyuréthane aliphatique et le deuxième matériau polyuréthane (17) est constitué de composants de polyuréthane aromatique.

10. Procédé selon l'une quelconque des revendications 1 à 9, **caractérisé en ce que** la feuille décorative (14) est un papier décoratif à base de cellulose présentant un grammage de 20 à 80 g/m².

11. Procédé selon l'une quelconque des revendications 1 à 10, **caractérisé en ce que** la feuille décorative (14) est guidée sous forme de bande continue au-dessus d'un premier rouleau chauffant et/ou la couche anti-adhérente (11) est guidée sous forme de bande continue au-dessus d'un second rouleau chauffant.

12. Procédé selon l'une quelconque des revendications 1 à 11, **caractérisé en ce qu'**un troisième matériau polyuréthane (20) est appliqué sur le deuxième matériau polyuréthane (17).

13. Procédé selon l'une quelconque des revendications 1 à 11, **caractérisé en ce qu'**une feuille fonctionnelle est posée sur le deuxième matériau polyuréthane ou sur un troisième matériau polyuréthane (20).

14. Procédé selon la revendication 13, **caractérisé en ce que** la feuille fonctionnelle est une plaque de liège.

15. Procédé selon l'une quelconque des revendications 1 à 14, **caractérisé en ce qu'**une couche adhésive avec un film détachable est appliquée sur une surface, opposée à la couche d'usure, du stratifié (1).
